# EUROPEAN PATENT APPLICATION

(11) **EP 3 492 778 A1**
(43) Date of publication of application: **05.06.2019**
(21) Application number: 17205083.3
(22) Date of filing: 04.12.2017
(51) Int. Cl.: F16H 21/40, F16C 9/04, F16C 3/22, F16H 21/18

(54) **TRANSMISSION MECHANISM**

(71) Applicant: OMA METAL INDUSTRIAL CO., LTD., Foshan City, Guangdong 528311 (CN)
(72) Inventor: XING, Kaibin, Foshan City, Guangdong (CN)
(74) Representative: Bringer, Mathieu

(57) **Abstract**

The present application relates to a transmission mechanism includes a transmission part, a swing part and a rotating part, wherein the transmission part includes at least two spaced transmissions each of which provided with a first end and a second end; the swing part includes at least two swings, one of the swings is hinged with the first end of a respective transmission; the rotating part includes at least two eccentric wheels, one of the eccentric wheels is rotationally connected with the second end of the respective transmission, an eccentric rotating part is provided on each eccentric wheel and able to drive the respective transmission and the respective swing to swing by rotating the eccentric wheel. The transmission mechanism of the present application has a simple structure, and cooperation between the eccentric wheels, the transmissions and the swings is continuous and smooth during operation.

## Description

### Technical field

The present application relates to the technical field of connecting device, and particularly to a transmission mechanism.

### Backgrounds

The operation of existing crank transmission mechanisms during the rotating of the crank is tend to be not continuous and smooth and easily to be stopped due to their unreasonable designs. Also, if the crank is forced to rotate in a state that it has been stopped, the connecting rod or the crank may be bended or broken off, reducing the transmission efficiency and even leading the whole device to be scrapped.

The above information disclosed in the backgrounds is only used to enhance the understanding of the backgrounds of the present application, and thus may include information which has not constitute prior arts known by an ordinary skill in the art.

### Summary of the application

In terms of this, embodiments of the present application wish to provide a transmission mechanism, so as to solve or relieve the technical problems existing in prior arts and at least provide a beneficial option.

Technical solutions of the embodiments of the present application are achieved as follows.

According to an embodiment of the present application, a transmission mechanism is provided, including:
a transmission part including at least two spaced transmissions each of which provided with a first end and a second end;
a swing part including at least two swings, one of the swings being hinged with the first end of a respective transmission;
a rotating part including at least two eccentric wheels, one of the eccentric wheels being rotationally connected with the second end of the respective transmission, an eccentric rotating part being provided on each eccentric wheel and being able to drive the respective transmission and the respective swing to swing by rotating the eccentric wheel.

In some embodiments, a first connection is provided between two adjacent eccentric wheels. Both ends of the first connection are connected with the eccentric rotating parts of two adjacent eccentric wheels respectively.

In some embodiments, a second connection is provided between two adjacent transmissions. Both ends of the second connection are rotationally connected with the two transmissions respectively.

In some embodiments, the second end of the transmission is provided with a ring-shaped structure.

In some embodiments, the eccentric wheel includes a first end and a second end opposite to the first end, a fixing flange is circumferentially arranged at the first end of the eccentric wheel, and the second end of the eccentric wheel is inserted into the ring- shaped structure and is provided with a slot circumferentially, a block is provided in the slot, and the eccentric wheel is fixed in the ring-shaped structure by the block along with the fixing flange.

In some embodiments, the eccentric wheel is inserted into the ring-shaped structure, the eccentric wheel includes a first end and a second end opposite to the first end, a slot is circumferentially provided on each of the first end and the second end, a block is provided in the slot, and the eccentric wheel is fixed in the ring-shaped structure by the block.

In some embodiments, the block is an elastic collar or baffle.

In some embodiments, the first connection is an axle structure.

In some embodiments, the second connection is an axle structure.

In some embodiments, the eccentric rotating parts of two adjacent eccentric wheels are staggered.

Based on the above technical solutions applied, embodiments of the present application have the following advantages: the transmission mechanism of the present application has a simple structure, and cooperation between the eccentric wheels, the transmissions and the swings is continuous and smooth during operation.

The above summary is only intended for the description and not intended for limiting in any way. In addition to the schematic aspects, implementations and features described above, further aspects, implementations and features of the present application will be easily understood by referring to the drawings and the following detailed description.

### Brief description of the drawings

In the drawings, unless stated otherwise, identical reference number throughout various drawings refers to identical or similar part or element. These drawings are drawn not to scale. It is understood that these drawings only represent some implementations disclosed according to the present application and should not be considered to limit the scope of the present application.
Fig. 1 is a whole schematic structure view of the transmission mechanism of embodiments of the present application;
Fig. 2 is an exploded view of Fig. 1;
Fig. 3 is a schematic structure view of the eccentric wheel of an embodiment of the present application.

### Detailed description

Hereinafter, only certain example embodiments are simply described. As understandable by a person skilled in the art, the described embodiments may be modified in various ways without departing from the spirit or scope of the present application. Therefore, the drawings and description are considered to be exemplary and not restrictive essentially.

In description of the present application, it is understood that the direction or positional relation denoted by the terms "center", "longitudinal", "transverse", "length", "width", "thick", "upper", "lower", "front", "back", "left", "right", "vertical", "horizontal", "top", "bottom", "in", "out", "clockwise", "counterclockwise", "axial", "radial", "circumferential" and so on is a direction or positional relation based on the drawings, which is only for the description of the present application and for simplification, and not indicates or implies that the referenced device or element must adopt a specific direction and be constructed or operated in a specific direction, and thus cannot be understood to limit the present application.

In addition, the terms "first", "second" are only for the purpose of description and cannot be understood to indicate or imply the relative importance or to indicate implicitly the referenced number of technical features. Therefore, a feature limited by "first" or "second" may include clearly or implicitly one or more this feature. In description of the present application, "a plurality of' means two or more, unless limited specifically otherwise.

In the present application, unless stated and limited specifically otherwise, the terms "mount", "connect with", "connect", "fix" and so on should be understood generally. For example, the case may be a fixed connection, may also be a removable connection, or integration; the case may be a mechanical connection, may also be an electrical connection, and may further be a communication; the case may be a direct connection, may also be an indirect connection with each other by an intermediate media, and may be an interconnection of the internals of two elements or an interaction of two elements. For an ordinary skill in the art, the specific meanings of the above terms in the present application may be understood according to specific cases.

In the present application, unless stated or limited specifically otherwise, a first feature is "above" or "below" a second feature may include the case that the first feature contact the second feature directly, and may also include the case that the first feature contact the second feature indirectly, but contact it by a further feature therebetween. Moreover, a first feature is "above", "over" and "on" includes the case that the first feature is right above and obliquely above the second feature, or only represents that the horizontal height of the first feature is greater than that of the second feature. A first feature is "below", "beneath", "under" a second feature includes the case that the first feature is right below and obliquely below the second feature, or only represents that the horizontal height of the first feature is smaller than that of the second feature.

The disclosure hereinafter provides various implementations or examples for implementing various structures of the present application. For simplifying the disclosure of the present application, components and arrangements of a particular example are described hereinafter. Of course, they are only used as examples, and are not intended for limiting the present application. In addition, reference numbers and/or reference alphabets may be repeatedly used in different examples in the present application, wherein such repeat is for the purpose of simplification and clarification, and itself cannot represent the relation between various implementations and/or arrangements discussed. Furthermore, examples of various particular processes and materials are provided in the present application, but an ordinary skill in the art can realize that other processes may be applied and/or other materials may be used.

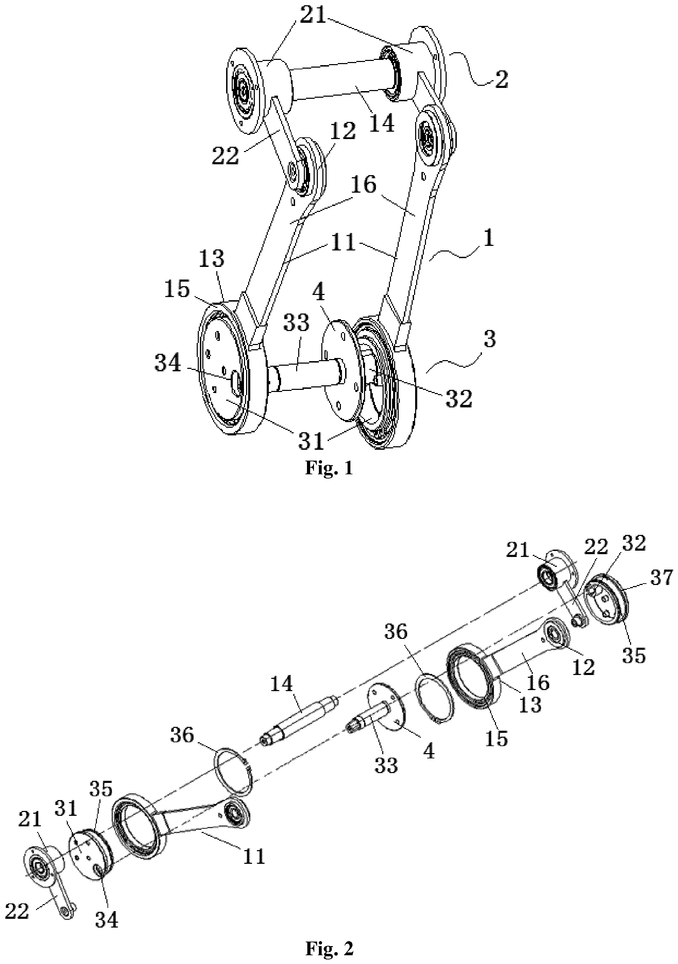

Fig. 1 and Fig. 2 are schematic structure views of the transmission mechanism of this embodiment. As shown in Fig. 1 and Fig. 2, the transmission mechanism provided in this embodiment includes:
a transmission part 1 including at least two spaced transmissions 11 each of which provided with a first end 12 and a second end 13;
a swing part 2 including at least two swings 21, one of the swings being hinged with the first end 12 of a respective transmission 11;
a rotating part 3 including at least two eccentric wheels 31, one of the eccentric wheels being rotationally connected with the second end 13 of the respective transmission 11, wherein an eccentric rotating part 32 is provided on each eccentric wheel 31 and can drive the respective transmission 11 and the respective swing 21 to swing by rotating the eccentric wheel 31.

In order to further smooth the transmission of the transmission mechanism and move the two eccentric wheels 31 simultaneously, a first connection 33 may be provided between two adjacent eccentric wheels 31 and both ends of the first connection 33 are connected with the eccentric rotating parts 32 of the two adjacent eccentric wheels 31 respectively.

In an embodiment, the eccentric rotating part 32 is a tubular structure through two opposed end faces of the eccentric wheel 31. Two mounting bases 34 are provided at two ends of the tubular structure respectively, and connected through the first connection 33..

In order to make the connection between the first connection 33 and the eccentric wheels 31 stable, thread structures mating with each other may be provided on the inside walls of the mounting base 34 and the ends of the first connection 33. Or, to this end, a slot may be provided within the mounting base 34 and a snap structure at an end of the first connection 33 may be provided to mate with the slot.

It should be noted that the connection manner between the two ends of the first connection 33 and the eccentric rotating parts 32 may be any connection manner in prior arts and is not limited to the connection manners described above, as long as the stable connection between the first connection 33 and the eccentric wheel 31 is ensured.

In a preferable embodiment, the first connection 33 is an axle structure.

The eccentric rotating parts 32 of two adjacent eccentric wheels 31 are staggered such that the transmissions 11 connected with the two eccentric wheels 31 respectively can move unsynchronously when the two eccentric wheels 31 rotate simultaneously, so as to achieve a crank-link mechanism constructed by the two adjacent eccentric wheels 31 along with the transmissions 11 and the swings 21 connected therewith respectively.

A second connection 14 is provided between two transmissions 11, both ends of the second connection are rotationally connected with two transmissions 11 such that the two transmissions 11 can rotate with respect to the second connection 14 during swinging. Here, the two transmissions 11 can rotate with respect to the second connection 14 separately, that is, when one of the two transmissions 11 is rotated with respect to one end of the second connection 14, the transmission 11 at the other end of the second connection 14 is not affected by the above rotation.

In a preferable embodiment, the second connection 14 is an axle structure.

In an embodiment, the second end 13 of the transmission 11 is provided with a ring-shaped structure 15 and the first end 12 of the transmission 11 is connected with the second end 13 by a connecting rod 16.

In a preferable embodiment, in order to increase the travel of the transmission mechanism, the swing 21 is provided with a connecting part 22 extending outward and being hinged with the first end 12 of the transmission 11.

As shown in Fig. 2, the eccentric wheel includes a first end and a second end opposite to the first end, a fixing flange 37 extending outward and in parallel with an end face of the eccentric wheel 31 is circumferentially arranged at the first end of the eccentric wheel 31. The second end of the eccentric wheel 31 is inserted into the ring-shaped structure 15 and is provided with a slot 35 circumferentially in which a block 36 is provided. Here, the diameters of both the block 36 and the fixing flange 37 are greater than the inner diameter of the ring-shaped structure 15, ensuring that the eccentric wheel 31 can snap into the ring-shaped structure 15 completely.

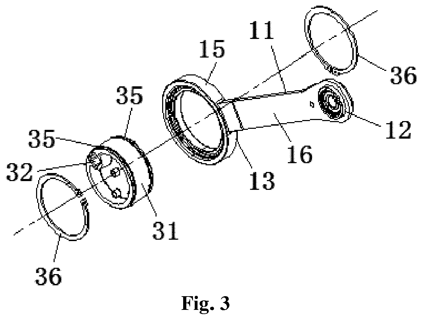

In another preferable embodiment, as shown in Fig. 3, slots 35 are provided at both ends of the eccentric wheel 31 circumferentially, the eccentric wheel 31 is inserted into the ring-shaped structure 15 and both ends of the eccentric wheel 31 project out of the ring-shaped structure 15. Blocks 36 are provided in the slot, wherein diameters of the two blocks 36 are greater than the inner diameter of the ring-shaped structure 15, ensuring that the eccentric wheel 31 can snap into the ring-shaped structure 15 completely.

In some embodiments, the block 36 is an elastic collar or baffle. In the case that the block 36 is an elastic collar, the elastic collar is nested into the slot 35 and snaps into the slot 35 firmly; while if the block 36 is a baffle, the baffle extends outward from the slot 35 and its extending length is greater than the inner diameter of the ring-shaped structure 15.

It should be noted that the block 36 can be any block structures in prior arts and is not limited to the structures described in the above embodiments, as long as the fixing of the eccentric wheel 31 into the ring-shaped structure 15 is achieved.

In operation of the transmission mechanism of this embodiment, the eccentric rotating part 32 is driven by an external force to bring the eccentric wheel 31 to rotate eccentrically, wherein the first connection 33 between two adjacent eccentric wheels 31 can ensure that the two eccentric wheels 31 move simultaneously; the transmission 11 swings back and forth about the eccentric rotating part 32 due to the above eccentric rotation, and the transmission 11 brings the swing 21 to follow its swinging as a result of the connection between the first end 12 of the transmission 11 and the swing 21, thereby converting the rotation of the eccentric wheel 31 into reciprocating swinging of the transmission 11 and the swing 21. Here, additional connection 4 may be provided on the first connecting rod 33, such that the present transmission mechanism can have a linkage with an external mechanism via the connection 4.

The above description is only specific implementation of the present application, but the protection scope of the present application is not limited thereto. Within the technical scope disclosed by the present application, any skills in the art can easily think out various variations or alternatives that are all covered by the protection scope of the present application. Therefore, the protection scope of the application should be subjected to that of the appended claims.

## Claims

1. A transmission mechanism, comprising:
a transmission part comprising at least two spaced transmissions each of which provided with a first end and a second end;
a swing part comprising at least two swings, one of the swings being hinged with the first end of a respective transmission;
a rotating part comprising at least two eccentric wheels, one of the eccentric wheels being rotationally connected with the second end of the respective transmission, an eccentric rotating part being provided on each eccentric wheel and being able to drive the respective transmission and the respective swing to swing by rotating the eccentric wheel.

2. The transmission mechanism according to claim 1,wherein a first connection is provided between two adjacent eccentric wheels, both ends of the first connection are connected with the eccentric rotating parts of the two adjacent eccentric wheels respectively.

3. The transmission mechanism according to claim 1, wherein a second connection is provided between two adjacent transmissions, both ends of the second connection are rotationally connected with the two transmissions respectively.

4. The transmission mechanism according to claim 1, wherein the second end of the transmission is provided with a ring-shaped structure.

5. The transmission mechanism according to claim 4, wherein the eccentric wheel comprises a first end and a second end opposite to the first end, a fixing flange is circumferentially arranged at the first end of the eccentric wheel, the second end of the eccentric wheel is inserted into the ring-shaped structure and is provided with a slot circumferentially, a block is provided in the slot, and the eccentric wheel is fixed in the ring-shaped structure by the block along with the fixing flange.

6. The transmission mechanism according to claim 4, wherein the eccentric wheel is inserted into the ring-shaped structure, the eccentric wheel comprises a first end and a second end opposite to the first end, a slot is circumferentially provided on each of the first end and the second end, a block is provided in the slot, and the eccentric wheel is fixed in the ring-shaped structure by the block.

7. The transmission mechanism according to claim 5 or 6, wherein the block is an elastic collar or baffle.

8. The transmission mechanism according to claim 2, wherein the first connection is an axle structure.

9. The transmission mechanism according to claim 3, wherein the second connection is an axle structure.

10. The transmission mechanism according to any one of claims 1 to 6, wherein the eccentric rotating parts of two adjacent eccentric wheels are staggered.
